(19) Europäisches Patentamt
European Patent Office
Office européen des brevets

(11) **EP 4 458 469 A1**

(12) **EUROPEAN PATENT APPLICATION**
published in accordance with Art. 153(4) EPC

(43) Date of publication:
**06.11.2024 Bulletin 2024/45**

(21) Application number: **22916484.3**

(22) Date of filing: **02.12.2022**

(51) International Patent Classification (IPC):
**B01L 7/00** *(2006.01)* **B01L 9/00** *(2006.01)*

(52) Cooperative Patent Classification (CPC):
**B01L 7/00; B01L 9/00**

(86) International application number:
**PCT/KR2022/019449**

(87) International publication number:
**WO 2023/128338 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021 KR 20210193129**

(71) Applicant: SUGENTECH, Inc.
**Daejeon 34047 (KR)**

(72) Inventors:
• **AN, Seungsu**
**Sejong 30064 (KR)**

• **KIM, Sungrak**
**Daejeon 34020 (KR)**
• **HONG, Doopyo**
**Sejong 30126 (KR)**
• **KANG, Sang Mo**
**Sejong 30151 (KR)**
• **YOO, Seungbum**
**Yongin-si Gyeonggi-do 17103 (KR)**
• **SOHN, Mi-Jin**
**Daejeon 34076 (KR)**

(74) Representative: **Kraus & Lederer PartGmbB**
**Thomas-Wimmer-Ring 15**
**80539 München (DE)**

(54) **INCUBATOR TEMPERATURE CONTROL SYSTEM AND MANUFACTURING METHOD THEREOF**

(57) The present invention relates to an incubator temperature control system and a manufacturing method thereof, and by forming a groove in a center portion of a heat transfer material and filling the groove with an insulating material, the present invention has an advantage of preventing heat from being transferred mainly to the center portion and allowing heat to be easily transferred to an edge portion.

[FIG. 1]

EP 4 458 469 A1

**Description**

[Technical Field]

The present invention relates to an incubator temperature control system and a manufacturing method thereof, and more particularly, to an incubator temperature control system capable of maintaining the temperature of each of reagents accommodated in two or more incubators including a plurality of strips within an error range, and a manufacturing method thereof.

[Background Art]

In a case of lateral flow immunoassay, a test may be usually performed at room temperature. However, performing the test at a constant temperature may be advantageous in reducing an analysis deviation caused by a temperature deviation. In addition, the lateral flow immunoassay may include a case requiring a preprocessing process performed at a specific temperature, such as dissociating a biomolecule bound to an analyte or performing antigen-antibody reaction in a solution.

A nucleic acid lateral flow (NALF) may be a method of performing a polymerase chain reaction (PCR) or an isothermal amplification reaction and then detecting a gene product amplified through the lateral flow analysis. A gene amplification process may require a reaction at a specific temperature. When using a hybridization reaction, the lateral flow analysis may be required to be performed at the specific temperature, and it may be advantageous to be performed at the specific temperature to reduce the analysis deviation caused by the temperature deviation.

A conventional bio-diagnostic incubator may use dedicated incubator equipment that provides 1:1 correspondence for each type of sample. That is, the conventional bio-diagnostic incubator may use an incubator dedicated to a micro-tube to efficiently react the sample in a micro-tube for a preprocessing operation, and require incubators dedicated to different types of cassette cartridges to provide an optimal temperature environment for each cassette cartridge. The conventional bio-diagnostic incubator may use a plurality of incubator devices, which is inefficient in terms of cost and use of a laboratory space.

Here, the incubator equipment is required to suppress the temperature deviation depending on a position of the reagent (that is, a position of a reagent module or the position of the reagent in the reagent module) to thus keep the temperature deviation within 1 degree. Here, the strip and a strip tray, mounted in the incubator equipment and accommodating the reagent, may all be required to be disposable and cheap. Therefore, it is difficult to use an expensive material such as aluminum, which is advantageous for heat conduction. In a case of incubator equipment made of plastic, the bottom of the strip tray may have a grid (or honeycomb) shape in order to reduce material usage while maintaining a constant shape and strength during its production. Accordingly, the strip and strip tray may each be spaced from the heater by a predetermined distance, thus resulting in difficulties not only in uniformly transmitting heat to each strip, but also in identifying heat transfer information. As a result, it may be difficult to control each strip to be maintained at a constant temperature.

In addition, the conventional bio-diagnostic incubator may use the plurality of trays, which may cause a side surface of the tray to have an increased temperature by being further heated due to additional heat passing between the respective trays from the heater.

[Disclosure]

[Technical Problem]

An object of the present invention is to provide an incubator temperature control system which may prevent heat from being transferred mainly to the center of a heat transfer material and allow heat to be easily transferred to its edge by forming a groove in the center and filling the groove with the insulating material, and a manufacturing method thereof.

Another object of the present invention is to provide an incubator temperature control system which may transfer heat uniformly to all incubators by filling a gap between a heat transfer material and an incubator grid to thus enable direct heat transfer, and by further including a heat dissipation pad having a size changed based on heat transfer efficiency depending on a position of an incubator, and a manufacturing method thereof.

[Technical Solution]

In one general aspect, provided is an incubator temperature control system, which controls the temperature of each of a plurality of incubators into each of which a strip accommodating a sample is inserted, the system including: a heating unit generating heat; a heat transfer unit having one side in contact with the incubator and the other side in contact with the heating unit for heat from the heating unit to be transferred to the incubator; and a heat dissipation unit disposed between the one side of the heat transfer unit and the incubator, and transferring heat from the heating unit uniformly regardless of a position of the incubator.

The other side of the heat transfer unit may be classified into a first area and a second area, the first area including an edge of the other side of the heat transfer unit and an area surrounded by lines each spaced apart from the edge by a predetermined distance, and the second area including the entire other side of the heat transfer unit excluding the first area, and the second area may be concave by a predetermined depth from the other side, and the heat transfer unit may further include an insulating material filling the second area to insulate the area from heat of the heating unit.

The insulating material may have heat conductivity lower than average heat conductivity of the heat transfer unit.

The heating unit may be a heating wire that generates heat by being in contact with the entire other side of the heat transfer unit, which includes the first area and the second area.

The heat dissipation unit may include two or more heat dissipation pads each made of a material having heat conductivity higher than air and disposed at each contact position between the incubator and the heat transfer unit.

The heat dissipation pad may have a shape of a figure that is line symmetrical to a central axis in a direction parallel to a direction in which the incubators are arranged, and a width of the heat dissipation pad from the central axis may satisfy the following equation:

$$L = \alpha(T_n + T_{n\pm1} \times 0.3 + T_{n\pm2 \times 0.1})$$

Here, L indicates a width of the heat dissipation pad at a position of an n-th strip, $T_n$ indicates a deviation between a temperature of the n-th strip and a target temperature, $T_{n\pm1}$ indicates a deviation between a temperature of an $n\pm$1st strip and the target temperature, $T_{n\pm2}$ indicates a deviation between a temperature of an $n\pm$2nd strip and the target temperature, and $\alpha$ indicates a proportionality constant.

The heat dissipation pad may protrude from or may have a groove in its surface while having a shape corresponding to an internal grid shape of the incubator.

The system may further include two or more temperature sensors receiving a temperature of at least one of the strip and the incubator, wherein the temperature sensor is mounted on a board, and the temperature sensors are spaced apart from each other by a predetermined distance to correspond to positions of the respective strips.

The system may further include a control unit receiving temperature data of the strip from the temperature sensor to thus control the heating unit, wherein the control unit designates, as a reference sensor, at least one temperature sensor among the plurality of temperature sensors to thus continuously receive the temperature data, and verifies reliability of the reference sensor by receiving a value of another temperature sensor and comparing the received value with a measurement value of the reference sensor when a temperature value of the reference sensor is outside a pre-entered normal range.

In another general aspect, provided is a manufacturing method of an incubator temperature control system, which is a method of manufacturing the incubator temperature control system, the method including: operation (a) of receiving, by a control unit, heat distribution data for a position of each strip; operation (b) of calculating a temperature deviation and a resulting width of a heat dissipation pad based on the heat distribution data received in operation (a); operation (c) of processing the heat dissipation pad based on a value of the heat dissipation pad that is calculated in operation (b); and operation (d) of attaching the heat dissipation pad to one side of a heat transfer unit.

Operation (a) may include operation (a1) of modeling, by the control unit, the shapes and materials of the strip, an incubator accommodating the strip, the heat transfer unit, and a heating unit, and operation (a2) of calculating, by the control unit, virtual heat distribution when heat is applied to a model modeled in operation (a1).

Operation (a) may include operation (a3) of disposing the incubator on one side of the heat transfer unit, operation (a4) of heating the incubator, and operation (a5) of receiving, by the control unit, a temperature of each strip from a temperature sensor receiving the temperature of each strip.

The method may further include operation (e) of coupling an insulating material or the heating unit to the heat transfer unit, which precedes operation (a), wherein operation (e) includes operation (e1) of forming a groove in a second area of the other side of the heat transfer unit, operation (e2) of filling the groove formed in operation (e1) with the insulating material having heat conductivity lower than that of the heat transfer unit, and operation (e3) of attaching the heating unit to the other side of the heat transfer unit.

Operation (b) may include operation (b1) of calculating the temperature deviation by comparing a target temperature and the temperature of each strip, and operation (b2) of calculating a width of the heat dissipation pad by using an equation below, based on the temperature deviation calculated in operation (b1):

$$L = \alpha(T_n + T_{n\pm1} \times 0.3 + T_{n\pm2 \times 0.1})$$

Here, L indicates a width of the heat dissipation pad at a position of an n-th strip, $T_n$ indicates a deviation between a temperature of the n-th strip and a target temperature, $T_{n\pm1}$ indicates a deviation between a temperature of an n±1st strip and the target temperature, $T_{n\pm2}$ indicates a deviation between a temperature of an n±2nd strip and the target temperature, and $\alpha$ indicates a proportionality constant.

Operation (c) may include operation (c1) of processing an outline of the heat dissipation pad based on its width value calculated in operation (b), and operation (c2) of processing a surface of one side of the heat dissipation pad to correspond to a bottom shape of the incubator.

[Advantageous Effects]

The incubator temperature control system and the manufacturing method thereof according to the present invention as described above may prevent heat from being transferred mainly to the center of the heat transfer material and allow heat to be easily transferred to its edge by forming the groove in the center and filling the groove with the insulating material.

The incubator temperature control system and the manufacturing method thereof according to the present invention may also transfer heat uniformly to all the incubators by filling the gap between the heat transfer material and the incubator grid to thus enable the direct heat transfer, and by further including the heat dissipation pad having the size changed based on the heat transfer efficiency depending on the position of the incubator.

[Description of Drawings]

FIG. 1 is an exploded perspective view of an incubator temperature control system of the present invention.

FIG. 2 is a plan view showing a coupling relationship between the heat transfer unit and heating unit of the present invention.

FIG. 3 is a cross-sectional view showing the coupling relationship between the heat transfer unit and heating unit of the present invention.

FIG. 4 is a graph showing a temperature deviation for each material in an insulating material of the present invention.

FIG. 5 is a cross-sectional view showing a heat conduction unit of the present invention.

FIG. 6 is a plan view showing a heat dissipation pad of the present invention.

FIG. 7 is a graph showing the heat distribution and heat deviation for a position of each strip.

FIG. 8 is a schematic view showing a numerical determination algorithm of the heat dissipation pad of the present invention.

FIG. 9 is a flowchart showing an incubator temperature control method of the present invention.

FIG. 10 is a flowchart showing detailed operations of a first embodiment of a data reception operation in the present invention.

FIG. 11 is a flowchart showing detailed operations of a second embodiment of the data reception operation in the present invention.

FIG. 12 is a flowchart showing detailed operations of a heat deviation calculation operation in the present invention.

FIG. 13 is a flowchart showing detailed operations of a heat dissipation padprocessing operation in the present invention.

FIG. 14 is a flowchart showing detailed operations of a coupling operation of an insulating material or a heating unit in the present invention.

[Best Mode]

Hereinafter, the spirit of the present invention is described in more detail with reference to the accompanying drawings. Terms and words used in the specification and claims are not to be construed as general or dictionary meanings, but are to be construed as meanings and concepts meeting the spirit of the present invention based on a principle that the present inventors may appropriately define the concepts of terms in order to describe their inventions in the best mode.

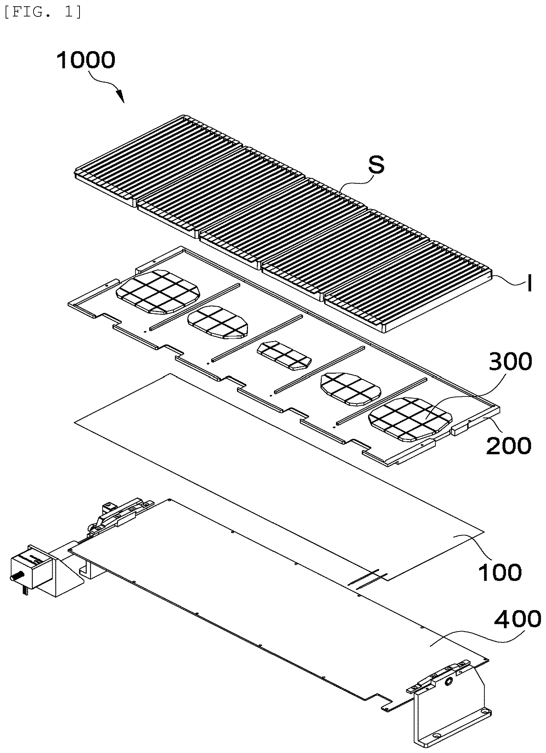

Hereinafter, the description describes a basic configuration of an incubator temperature control system 1000 of the present invention with reference to FIG. 1.

The incubator temperature control system 1000 of the present invention may be a system for controlling the temperature of each of a plurality of incubators I, into each of which a strip S accommodating a sample is inserted. As shown in FIG. 1, the system 1000 may include a heating unit 100 generating heat and a heat transfer unit 200 having one side in contact with the incubator I and the other side in contact with the heating unit 100 for heat from the heating unit 100 to be transferred to the incubator I. Here, the heat transfer unit 200 and the heating unit 100 may extend to be long in one direction to transfer heat while being in contact with two or more incubators I. In addition, the heat transfer unit 200 may have a groove or a protrusion, corresponding to a shape of the incubator I, in or on one side for the incubator I to be inserted thereinto. The heat transfer unit 200 may be preferably made of a material having high heat conductivity, and use aluminum as an example.

In addition, the incubator temperature control system 1000 of the present invention may include a heat dissipation unit 300 disposed between one side of the heat transfer unit 200 and the incubator I, and transferring heat from the heating unit 100 uniformly regardless of a position of the incubator I. The system 1000 may include the heat dissipation unit 300 to thus precisely control a temperature deviation depending on a position of each strip S. The description provides below descriptions of the specific shape and configuration of the heat dissipation unit 300.

In addition, the incubator temperature control system 1000 of the present invention may further include a protective pad 400 on the other side of the heating unit 100. The system 1000 may include the protective pad 400, thereby not only fixing positions of the incubator I, the heating unit 100, and the heat transfer unit 200, but also protecting an external environment for heat from the heating unit 100 to have the minimal impact on the external environment rather than on the heat transfer unit 200.

In addition, the incubator temperature control system 1000 of the present invention may include two or more temperature sensors (not shown) receiving a temperature of at least one of the strip S and the incubator I. It is preferable that the temperature sensor (not shown) is mounted on a board, and the temperature sensors (not shown) are spaced apart from each other by a predetermined distance to correspond to the positions of the respective strips S. In addition, the system 1000 may further include a control unit (not shown) receiving temperature data of the strip S from the temperature sensor (not shown) to thus control the heating unit 100. It may be preferable that the control unit (not shown) designates, as a reference sensor, at least one temperature sensor (not shown) among the plurality of temperature sensors (not shown) to thus continuously receive the temperature data, and verifies reliability of the reference sensor by receiving a value of another temperature sensor (not shown) and comparing the received value with a measurement value of the reference sensor when a temperature value of the reference sensor is outside a pre-entered normal range.

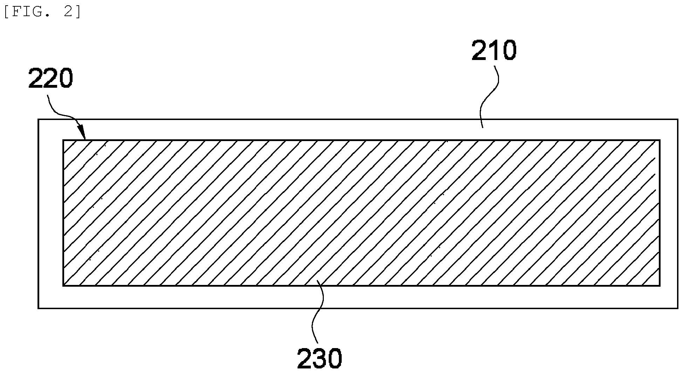

Hereinafter, the description describes a coupling relationship between the heat transfer unit 200, insulating material 230, and heating unit 100 of the present invention with reference to FIGS. 2 to 4.

As shown in FIG. 2, the other side of the heat transfer unit 200 may be classified into two areas. In more detail, the other side of the heat transfer unit 200 may be classified into a first area 210 and a second area 220, the first area 210 being disposed at an edge of the other side of the heat transfer unit 200 or including the edge of the other side of the heat transfer unit 200 and an area surrounded by lines each spaced apart from the edge by a predetermined distance, and the second area 220 being disposed at the center of the heat transfer unit 200 or including the entire other side of the heat transfer unit 200 excluding the first area 210. Typically, the first area 210 may be affected by the external environment, thus easily losing heat from the heating unit 100. On the other hand, the second area 220 may continuously receive heat from the heating unit 100 to thus be maintained at a temperature higher than the first area 210. Here, the incubator I or the strip S disposed at the edge may have a temperature higher than the incubator I or the strip S disposed at the center, thus making it difficult to maintain a uniform temperature.

Accordingly, the present invention may lower the temperature at the center by filling the second area 220 disposed at the center of the heat transfer unit 200 with the insulating material 230 having heat conductivity lower than that of the heat transfer unit 200, and transfer heat at a faster rate to the first area 210 along the heat transfer unit 200 having high heat conductivity, thus immediately compensating for heat loss even when heat is lost due to the external environment. In more detail, the heat transfer unit 200 of the present invention may have a groove formed in a portion corresponding to the second area 220. Here, the groove may be formed in the other side in contact with the heating unit 100. It may be preferable that the heat transfer unit 200 then further includes the insulating material 230 filling the groove formed in this way to insulate the corresponding part from heat of the heating unit 100. Here, the insulating material 230 may be Teflon or acetal.

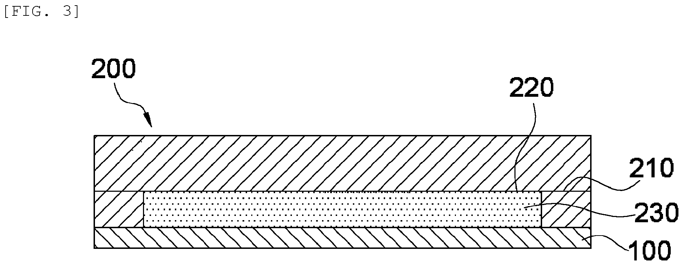

As shown in FIG. 3, the heating unit 100 may be contact-coupled to the entire other side of the heat transfer unit 200. In more detail, it may be preferable that the heating unit 100 is a heating wire that generates heat by being in contact with the entire other side of the heat transfer unit 200, which includes the first area 210 and the second area 220. In addition, the heating unit 100 may be changed to various shapes and materials under a condition that the heating unit 100 is coupled to the other side of the heat transfer unit 200 while having a thin film shape.

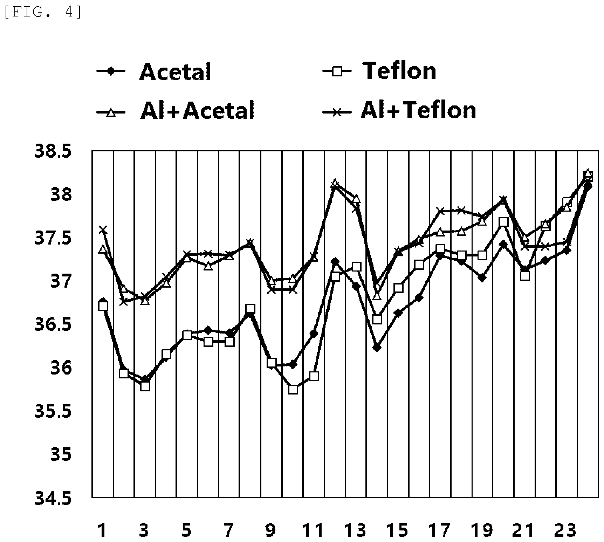

As described above, the system 1000 may adopt a form that lowers heat conductivity of its center, thereby easily dissipating heat which may be concentrated in the center to the edges. The description refers to a graph shown in FIG. 4 to more clearly describe an effect of the present invention. When referring to the graph in FIG. 4, it may be seen that a temperature deviation has a smaller value in a case where the groove is formed in the center of the heat transfer unit 200 and the insulating material 230 fills only the center (here, the insulating material 230 made of acetal is shown in gray, and the insulating material 230 made of Teflon is shown in yellow) than in a case where the insulating material 230 is laminated on the entire surface of the heat transfer unit 200 and disposed between the heat transfer unit 200 and the heating unit 100 (here, the insulating material 230 made of acetal is shown in blue, and the insulating material 230 made of Teflon is shown in red).

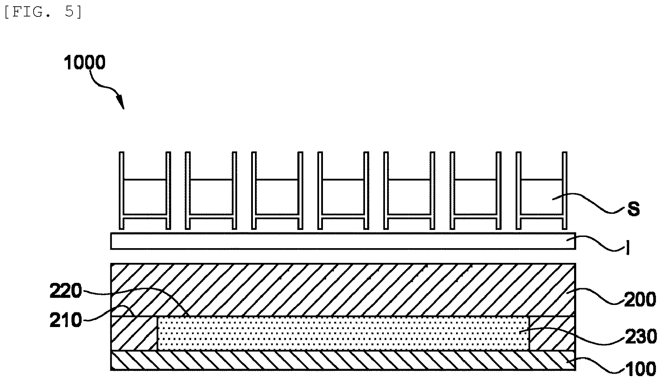

Hereinafter, the description describes the heat conduction unit of the present invention with reference to FIGS. 5 to 9.

As shown in FIG. 5, the incubator temperature control system 1000 of the present invention may include the heat dissipation unit 300 disposed between one side of the heat transfer unit 200 and the incubator I, and transferring heat from the heating unit 100 uniformly regardless of the position of the incubator I. It may be preferable that the heat dissipation unit 300 includes two or more heat dissipation pads 310 each made of a material having heat conductivity higher than air and disposed at each contact position between the incubator I and the heat transfer unit 200. The heat dissipation pads 310 may be made of the same material as the heat transfer unit 200, for example, aluminum.

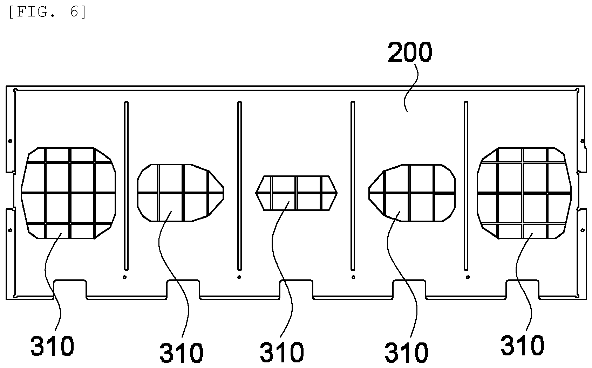

As shown in FIG. 6, it may be preferable that the heat dissipation pad 310 has a shape of a figure that is line symmetrical to the central axis in a direction parallel to a direction in which the incubators I are arranged. Widths of the heat dissipation pads 310 may be set to be different from each other depending on the positions of the strips S. In addition, it may be preferable that the heat dissipation pad 310 protrudes from or has a groove in its surface while having a shape corresponding to an internal grid shape of the incubator I. Accordingly, the surface of the heat dissipation pad 310 and the grid shape of the incubator I may be engaged with each other to fix the position of the incubator I, and simultaneously allow heat to be conducted more directly to the strip S accommodated in the incubator I.

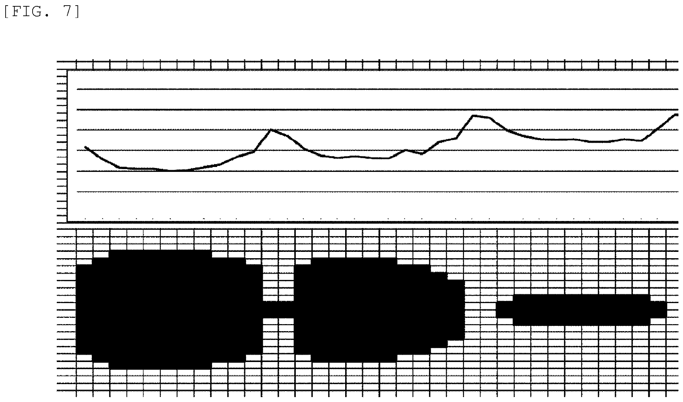

In more detail, the width of the heat dissipation pad 310 depending on the position of the strip S may be calculated when the temperature deviation value for each position of the strip S is measured as shown in the graph in FIG. 7. It may be preferable that the width of the heat dissipation pad 310 from the central axis satisfies the following equation.

$$\text{Equation:}\quad L = \alpha(T_n + T_{n\pm 1} \times 0.3 + T_{n\pm 2 \times 0.1})$$

Here, L indicates a width of the heat dissipation pad 310 at a position of an n-th strip S, $T_n$ indicates a deviation between a temperature of the n-th strip S and a target temperature, $T_{n\pm 1}$ indicates a deviation between a temperature of an n±1st strip S and the target temperature, $T_{n\pm 2}$ indicates a deviation between a temperature of an n±2nd strip S and the target temperature, and $\alpha$ indicates a proportionality constant. The above equation takes into account both of a temperature value (or temperature deviation) that needs to be compensated for each position of the strip S and a thermal influence exerted by compensating for the temperature deviation occurring in the surrounding strip S.

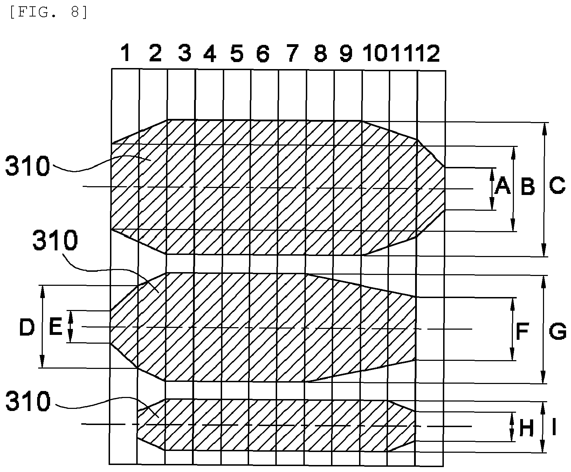

As shown in FIG. 8, the shape of the heat dissipation pads 310 may be determined by applying the width of the heat dissipation pad 310 calculated depending on the position of the strip S. The heat dissipation pad 310 in FIG. 8 is the heat dissipation pad 310 applied to the bottom of the incubator I based on the graph of FIG. 7.

It may be preferable that each heat dissipation pad has a width (or a vertical axis length in FIG. 8) equal to a value of L (or the width), which is acquired by measuring the temperature deviation between the respective strips S, and substituting the same into the above-mentioned equation. Here, it may be preferable that the heat dissipation pad has a horizontal axis length divided into equal parts by the number of strips S inserted into one incubator I. That is, when a width value calculated based on the temperature deviation in the strip S 1 is B, E, or H, the horizontal axis length of the heat dissipation pad 310 at its position in contact with a strip S1 may be a length divided into equal parts by the number of the strip S, and the vertical axis length of the heat dissipation pad 310 (or its width) may be B, E, or H to thus form one surface. Here, it may be preferable that the heat dissipation pad 310 is designed to be filleted to have diagonal edges for easy processing and continuity of heat transfer when the width values for the respective positions of the adjacent strips S are different from each other.

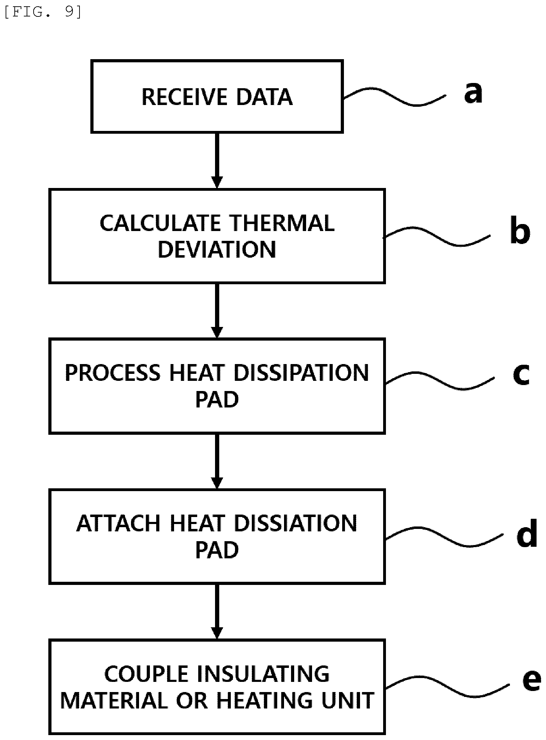

Hereinafter, the description describes an incubator temperature control method of the present invention with reference to FIGS. 9 to 13.

As shown in FIG. 9, it may be preferable that a manufacturing method of an incubator temperature control system 1000 according to the present invention, which is a method of manufacturing the incubator temperature control system 1000, includes: operation (a) of receiving, by a control unit (not shown), heat distribution data for a position of each strip S; operation (b) of calculating a temperature deviation and a resulting width of a heat dissipation pad 310 based on the heat distribution data received in operation (a); operation (c) of processing the heat dissipation pad 310 based on a value of the heat dissipation pad 310 that is calculated in operation (b); and operation (d) of attaching the heat dissipation pad 310 to one side of a heat transfer unit 200.

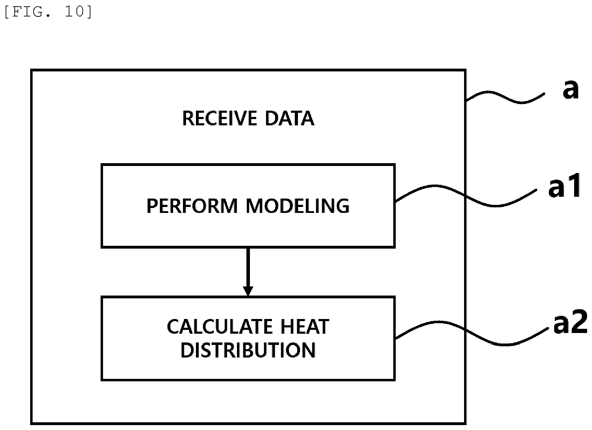

As shown in FIG. 10, a first embodiment of (a) data reception operation in the present invention may include operation (a1) of modeling, by the control unit (not shown), the shapes and materials of the strip S, an incubator I accommodating the strip S, the heat transfer unit 200, and a heating unit 100, and operation (a2) of calculating, by the control unit (not shown), virtual heat distribution when heat is applied to a model modeled in operation (a1). Consumption of the parts may be minimized by applying the first embodiment of the operation (a).

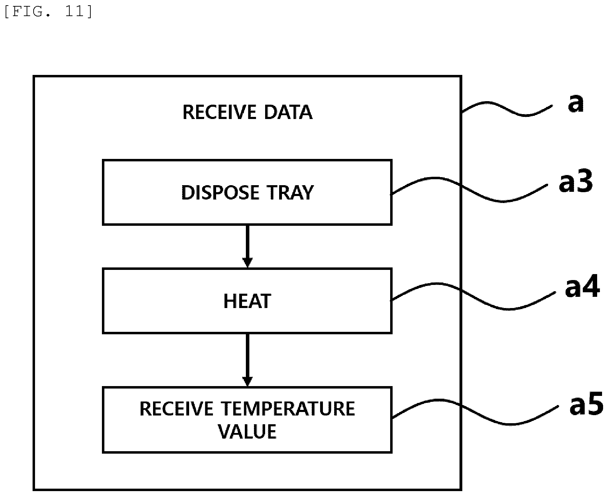

Alternatively, as shown in FIG. 11, a second embodiment of (a) data reception operation in the present invention may include operation (a3) of disposing the incubator I on one side of the heat transfer unit 200, operation (a4) of heating the incubator I, and operation (a5) of receiving, by the control unit (not shown), a temperature of each strip S from a temperature sensor (not shown) receiving the temperature of each strip S. Here, it may be preferable that before performing operation (a), the control unit (not shown) designates, as a reference sensor, at least one temperature sensor (not shown) among the plurality of temperature sensors (not shown) to thus continuously receive temperature data, and verifies reliability of the reference sensor by receiving a value of another temperature sensor (not shown) and comparing the received value with a measurement value of the reference sensor when a temperature value of the reference sensor is outside a pre-entered normal range.

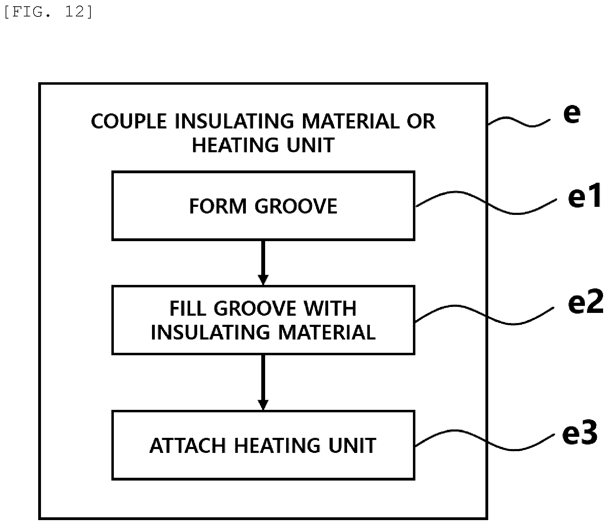

When applying the second embodiment of data reception operation (a) in the present invention, the incubator temperature control method of the present invention may further include operation (e) of coupling an insulating material 230 or the heating unit 100 to the heat transfer unit 200, which precedes operation (a). Operation (e) is shown in FIG. 12. It may be preferable that operation (e) includes operation (e1) of forming a groove in a second area 220 of the other side of the heat transfer unit 200, operation (e2) of filling the groove formed in operation (e1) with the insulating material 230 having heat conductivity lower than that of the heat transfer unit 200, and operation (e3) of attaching the heating unit 100 to the other side of the heat transfer unit 200.

In more detail, the other side of the heat transfer unit 200 may be classified into a first area 210 and a second area 220, the first area 210 being disposed at an edge of the other side of the heat transfer unit 200 or including the edge of the other side of the heat transfer unit 200 and an area surrounded by lines each spaced apart from the edge by a predetermined distance, and the second area 220 being disposed at the center of the heat transfer unit 200 or including the entire other side of the heat transfer unit 200 excluding the first area 210. Typically, the first area 210 may be affected by an external environment, thus easily losing heat from the heating unit 100. On the other hand, the second area 220 may continuously receive heat from the heating unit 100 to thus be maintained at a temperature higher than that of the first area 210. Here, the incubator I or the strip S disposed at the edge may have a temperature higher than the incubator I or the strip S disposed at the center, thus making it difficult to maintain a uniform temperature.

Accordingly, the present invention may lower the temperature at the center by filling the second area 220 disposed at the center of the heat transfer unit 200 with the insulating material 230 having the heat conductivity lower than that of the heat transfer unit 200, and transfer heat at a faster rate to the first area 210 along the heat transfer unit 200 having high heat conductivity, thus immediately compensating for heat loss even when heat is lost due to the external environment.

Here, the heating unit 100 may be contact-coupled to the entire other side of the heat transfer unit 200. In more detail, it may be preferable that the heating unit 100 is a heating wire that generates heat by being in contact with the entire other side of the heat transfer unit 200, which includes the first area 210 and the second area 220. In addition, the heating unit 100 may be changed to various shapes and materials under a condition that the heating unit 100 is coupled to the other side of the heat transfer unit 200 while having a thin film shape.

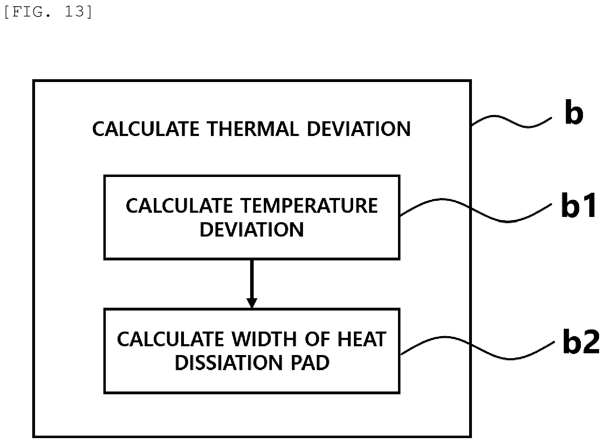

In addition, as shown in FIG. 13, it may be preferable that operation (b) includes operation (b1) of calculating the temperature deviation by comparing a target temperature and the temperature of each strip S, and operation (b2) of calculating a width of the heat dissipation pad 310 by using an equation below, based on the temperature deviation calculated in operation (b1).

Equation: $L=\alpha(T_n+T_{n\pm 1}\times 0.3+T_{n\pm 2\times 0.1})$

Here, L indicates a width of the heat dissipation pad 310 at a position of an n-th strip S, $T_n$ indicates a deviation between a temperature of the n-th strip S and a target temperature, $T_{n\pm 1}$ indicates a deviation between a temperature of an nilst strip S and the target temperature, $T_{n\pm 2}$ indicates a deviation between a temperature of an n±2nd strip S and the target temperature, and $\alpha$ indicates a proportionality constant. The above equation takes into account both of a temperature value (or temperature deviation) that needs to be compensated for each position of the strip S and a thermal influence exerted by compensating for the temperature deviation occurring in the surrounding strip S.

Here, it may be preferable that each heat dissipation pad has a width (or a vertical axis length in FIG. 8) equal to a value of L (or the width), which is acquired by measuring the temperature deviation between the respective strips S, and substituting the same into the above-mentioned equation. Here, it may be preferable that the heat dissipation pad has a horizontal axis length divided into equal parts by the number of strips S inserted into one incubator I. That is, when a width value calculated based on the temperature deviation in the strip S 1 is B, E, or H, the horizontal axis length of the heat dissipation pad 310 at its position in contact with a strip S1 may be a length divided into equal parts by the number of the strip S, and the vertical axis length of the heat dissipation pad 310 (or its width) may be B, E, or H to thus form one surface. Here, it may be preferable that the heat dissipation pad 310 is designed to be filleted to have diagonal edges for easy processing and continuity of heat transfer when the width values for the respective positions of the adjacent strips S are different from each other.

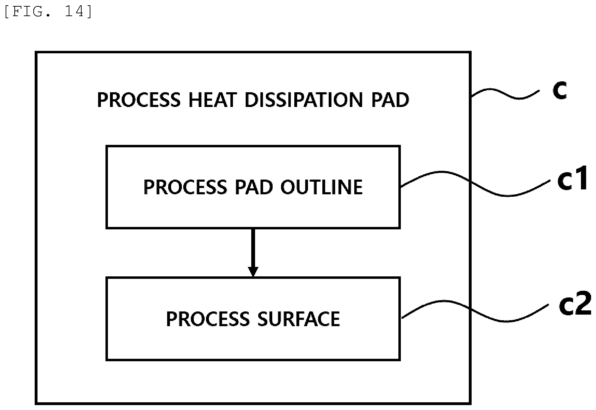

In addition, as shown in FIG. 14, it may be preferable that operation (c) includes operation (c1) of processing an outline of the heat dissipation pad 310 based on its width value calculated in operation (b), and operation (c2) of processing a surface of one side of the heat dissipation pad 310 to correspond to a bottom shape of the incubator I. In operation (c2), it may be preferable that the heat dissipation pad 310 protrudes from or has a groove in its surface while having a shape corresponding to an internal grid shape of the incubator I. Accordingly, the surface of the heat dissipation pad 310 and the grid shape of the incubator I may be engaged with each other to fix the position of the incubator I, and simultaneously allowing heat to be conducted more directly to the strip S accommodated in the incubator I.

The spirit of the present invention should not be limited to an embodiment described above. The present invention may be applied to various fields and may be variously modified by those skilled in the art without departing from the scope of the present invention claimed in the claims. Therefore, it is obvious to those skilled in the art that these alterations and modifications fall within the scope of the present invention.

**Claims**

1. An incubator temperature control system, which controls the temperature of each of a plurality of incubators into each of which a strip accommodating a sample is inserted, the system comprising:

   a heating unit generating heat;
   a heat transfer unit having one side in contact with the incubator and the other side in contact with the heating unit for heat from the heating unit to be transferred to the incubator; and
   a heat dissipation unit disposed between the one side of the heat transfer unit and the incubator, and transferring heat from the heating unit uniformly regardless of a position of the incubator.

2. The system of claim 1, wherein the other side of the heat transfer unit is classified into a first area and a second area, the first area including an edge of the other side of the heat transfer unit and an area surrounded by lines each spaced apart from the edge by a predetermined distance, and the second area including the entire other side of the heat transfer unit excluding the first area, and

   the second area is concave by a predetermined depth from the other side, and
   the heat transfer unit further includes an insulating material filling the second area to insulate the area from heat of the heating unit.

3. The system of claim 2, wherein the insulating material has heat conductivity lower than average heat conductivity of the heat transfer unit.

4. The system of claim 3, wherein the heating unit is a heating wire that generates heat by being in contact with the entire other side of the heat transfer unit, which includes the first area and the second area.

5. The system of claim 1, wherein the heat dissipation unit includes two or more heat dissipation pads each made of a material having heat conductivity higher than air and disposed at each contact position between the incubator and the heat transfer unit.

6. The system of claim 5, wherein the heat dissipation pad has a shape of a figure that is line symmetrical to a central axis in a direction parallel to a direction in which the incubators are arranged, and
a width of the heat dissipation pad from the central axis satisfies the following equation:

$$L = \alpha(T_n + T_{n\pm1} \times 0.3 + T_{n\pm2 \times 0.1})$$

(here, L indicates a width of the heat dissipation pad at a position of an n-th strip, $T_n$ indicates a deviation between a temperature of the n-th strip and a target temperature, $T_{n\pm1}$ indicates a deviation between a temperature of an $n\pm1$st strip and the target temperature, $T_{n\pm2}$ indicates a deviation between a temperature of an $n\pm2$nd strip and the target temperature, and $\alpha$ indicates a proportionality constant).

7. The system of claim 5, wherein the heat dissipation pad protrudes from or has a groove in its surface while having a shape corresponding to an internal grid shape of the incubator.

8. The system of claim 1, further comprising two or more temperature sensors receiving a temperature of at least one of the strip and the incubator,

wherein the temperature sensor is mounted on a board, and
the temperature sensors are spaced apart from each other by a predetermined distance to correspond to positions of the respective strips.

9. The system of claim 8, further comprising a control unit receiving temperature data of the strip from the temperature sensor to thus control the heating unit,

wherein the control unit designates, as a reference sensor, at least one temperature sensor among the plurality of temperature sensors to thus continuously receive the temperature data, and
verifies reliability of the reference sensor by receiving a value of another temperature sensor and comparing the received value with a measurement value of the reference sensor when a temperature value of the reference sensor is outside a pre-entered normal range.

10. A manufacturing method of an incubator temperature control system, which is a method of manufacturing the incubator temperature control system, the method comprising:

operation (a) of receiving, by a control unit, heat distribution data for a position of each strip;
operation (b) of calculating a temperature deviation and a resulting width of a heat dissipation pad based on the heat distribution data received in operation (a);
operation (c) of processing the heat dissipation pad based on a value of the heat dissipation pad that is calculated in operation (b); and
operation (d) of attaching the heat dissipation pad to one side of a heat transfer unit.

11. The method of claim 10, wherein operation (a) includes

operation (a1) of modeling, by the control unit, the shapes and materials of the strip, an incubator accommodating the strip, the heat transfer unit, and a heating unit, and
operation (a2) of calculating, by the control unit, virtual heat distribution when heat is applied to a model modeled in operation (a1).

12. The method of claim 10, wherein operation (a) includes

operation (a3) of disposing the incubator on one side of the heat transfer unit,
operation (a4) of heating the incubator, and
operation (a5) of receiving, by the control unit, a temperature of each strip from a temperature sensor receiving the temperature of each strip.

**13.** The method of claim 12, further comprising operation (e) of coupling an insulating material or the heating unit to the heat transfer unit, which precedes operation (a),

wherein operation (e) includes
operation (e1) of forming a groove in a second area of the other side of the heat transfer unit,
operation (e2) of filling the groove formed in operation (e1) with the insulating material having heat conductivity lower than that of the heat transfer unit, and
operation (e3) of attaching the heating unit to the other side of the heat transfer unit.

**14.** The method of claim 10, wherein operation (b) includes

operation (b1) of calculating the temperature deviation by comparing a target temperature and the temperature of each strip, and
operation (b2) of calculating a width of the heat dissipation pad by using an equation below, based on the temperature deviation calculated in operation (b1):

$$L = \alpha(T_n + T_{n\pm1} \times 0.3 + T_{n\pm2 \times 0.1})$$

(here, L indicates a width of the heat dissipation pad at a position of an n-th strip, $T_n$ indicates a deviation between a temperature of the n-th strip and a target temperature, $T_{n\pm1}$ indicates a deviation between a temperature of an $n\pm1$st strip and the target temperature, $T_{n\pm2}$ indicates a deviation between a temperature of an $n\pm2$nd strip and the target temperature, and $\alpha$ indicates a proportionality constant).

**15.** The method of claim 10, wherein operation (c) includes

operation (c1) of processing an outline of the heat dissipation pad based on its width value calculated in operation (b), and
operation (c2) of processing a surface of one side of the heat dissipation pad to correspond to a bottom shape of the incubator.

[FIG. 1]

[FIG. 2]

[FIG. 3]

[FIG. 4]

[FIG. 5]

1000

S

I

220

210

200

230

100

[FIG. 6]

200

310 310 310 310 310

[FIG. 7]

[FIG. 8]

[FIG. 9]

```
┌─────────────────────────┐
│       RECEIVE DATA      │ ～～～ a
└─────────────────────────┘
            │
            ▼
┌─────────────────────────┐
│    CALCULATE THERMAL    │ ～～～ b
│        DEVIATION        │
└─────────────────────────┘
            │
            ▼
┌─────────────────────────┐
│  PROCESS HEAT DISSIPATION│ ～～～ c
│           PAD           │
└─────────────────────────┘
            │
            ▼
┌─────────────────────────┐
│   ATTACH HEAT DISSIATION │ ～～～ d
│           PAD           │
└─────────────────────────┘
            │
            ▼
┌─────────────────────────┐
│     COUPLE INSULATING   │ ～～～ e
│  MATERIAL OR HEATING UNIT│
└─────────────────────────┘
```

[FIG. 10]

RECEIVE DATA — a

PERFORM MODELING — a1

CALCULATE HEAT DISTRIBUTION — a2

[FIG. 11]

RECEIVE DATA — a

DISPOSE TRAY — a3

HEAT — a4

RECEIVE TEMPERATURE VALUE — a5

[FIG. 12]

COUPLE INSULATING MATERIAL OR HEATING UNIT — e

FORM GROOVE — e1

↓

FILL GROOVE WITH INSULATING MATERIAL — e2

↓

ATTACH HEATING UNIT — e3

[FIG. 13]

CALCULATE THERMAL DEVIATION — b

CALCULATE TEMPERATURE DEVIATION — b1

CALCULATE WIDTH OF HEAT DISSIATION PAD — b2

[FIG. 14]

PROCESS HEAT DISSIPATION PAD — C

PROCESS PAD OUTLINE — c1

↓

PROCESS SURFACE — c2

## INTERNATIONAL SEARCH REPORT

| International application No. |
| --- |
| **PCT/KR2022/019449** |

### A. CLASSIFICATION OF SUBJECT MATTER

**B01L 7/00**(2006.01)i; **B01L 9/00**(2006.01)i

According to International Patent Classification (IPC) or to both national classification and IPC

### B. FIELDS SEARCHED

Minimum documentation searched (classification system followed by classification symbols)

B01L 7/00(2006.01); B01J 19/00(2006.01); B01L 3/00(2006.01); B01L 9/06(2006.01); C12M 1/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인큐베이터(incubator), 온도(temperature), 제어(control), 가열(heat), 전열(heat transfer), 열분산(heat spread), 균일(uniform), 스트립(strip), 시료(specimen)

### C. DOCUMENTS CONSIDERED TO BE RELEVANT

| Category* | Citation of document, with indication, where appropriate, of the relevant passages | Relevant to claim No. |
| --- | --- | --- |
| Y | JP 6891981 B2 (SHIMADZU CORPORATION) 18 June 2021 (2021-06-18)<br>See paragraphs [0016]-[0017]; and figure 1. | 1,5,8 |
| A | | 2-4,6-7,9-15 |
| Y | KR 10-2009-0076850 A (KOREA INSTITUTE OF INDUSTRIAL TECHNOLOGY) 13 July 2009 (2009-07-13)<br>See paragraphs [0001] and [0034]-[0042]; and figures 3 and 6-7b. | 1,5,8 |
| Y | JP 2003-093043 A (SANYO ELECTRIC CO., LTD.) 02 April 2003 (2003-04-02)<br>See paragraph [0019]; and figures 1-2. | 5 |
| Y | KR 10-2019-0093595 A (EVONETIX LTD.) 09 August 2019 (2019-08-09)<br>See paragraph [0043]; and figure 3. | 8 |
| A | KR 10-2020-0109187 A (FUTURE-ENG CO., LTD.) 22 September 2020 (2020-09-22)<br>See entire document. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 March 2023** | **10 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/019449**

| Patent document cited in search report | | | Publication date (day/month/year) | Patent family member(s) | | | Publication date (day/month/year) |
|---|---|---|---|---|---|---|---|
| JP | 6891981 | B2 | 18 June 2021 | CN | 111386154 | A | 07 July 2020 |
| | | | | JP | 2020-150625 | A1 | 19 November 2020 |
| | | | | US | 2021-0060568 | A1 | 04 March 2021 |
| | | | | WO | 2019-150625 | A1 | 08 August 2019 |
| KR | 10-2009-0076850 | A | 13 July 2009 | KR | 10-1012865 | B1 | 08 February 2011 |
| JP | 2003-093043 | A | 02 April 2003 | None | | | |
| KR | 10-2019-0093595 | A | 09 August 2019 | CN | 110022981 | A | 16 July 2019 |
| | | | | CN | 110022981 | B | 12 April 2022 |
| | | | | EP | 3551331 | A1 | 16 October 2019 |
| | | | | EP | 3551331 | B1 | 29 December 2021 |
| | | | | JP | 2020-501271 | A | 16 January 2020 |
| | | | | JP | 7022130 | B2 | 17 February 2022 |
| | | | | KR | 10-2488179 | B1 | 13 January 2023 |
| | | | | US | 11577251 | B2 | 14 February 2023 |
| | | | | US | 2019-0275527 | A1 | 12 September 2019 |
| | | | | WO | 2018-104698 | A1 | 14 June 2018 |
| KR | 10-2020-0109187 | A | 22 September 2020 | CN | 113348239 | A | 03 September 2021 |
| | | | | EP | 3939703 | A2 | 19 January 2022 |
| | | | | EP | 3939703 | A4 | 11 January 2023 |
| | | | | KR | 10-2204931 | B1 | 20 January 2021 |
| | | | | US | 2022-0118456 | A1 | 21 April 2022 |
| | | | | WO | 2020-184844 | A2 | 17 September 2020 |
| | | | | WO | 2020-184844 | A3 | 05 November 2020 |

Form PCT/ISA/210 (patent family annex) (July 2022)